# EUROPÄISCHE PATENTSCHRIFT

(11) **EP 3 591 268 B1**
(45) Veröffentlichungstag und Bekanntmachung des Hinweises auf die Patenterteilung: **04.08.2021**
(21) Anmeldenummer: 19180755.1
(22) Anmeldetag: 18.06.2019
(51) Int. Cl.: F16K 5/04, F16L 41/02, F24D 19/10

(54) **FLUIDLEITUNGSVERBINDER MIT FIXIERTEM EINSATZTEIL ZUR DROSSLUNG**
FLUID LINE CONNECTOR WITH FIXED INSERT FOR THROTTLING
CONNECTEUR DE CONDUITE DE FLUIDE POURVU DE PIÈCE D'INSERTION FIXE DESTINÉE À L'ÉTRANGLEMENT

(30) Priorität: 06.07.2018 DE 102018116478; 22.10.2018 DE 102018126191
(43) Veröffentlichungstag der Anmeldung: 08.01.2020
(73) Patentinhaber: Voss Automotive GmbH, 51688 Wipperfürth (DE)
(72) Erfinder: GMEINER, Swen, 51709 Marienheide (DE); AKCAN, Ali, 51688 Wipperfürth (DE)
(74) Vertreter: Dr. Solf & Zapf Patent- und Rechtsanwalts PartG mbB

(56) Entgegenhaltungen:
- WO-A1-00/79161
- GB-A- 2 409 501

## Beschreibung

Die Erfindung betrifft einen Fluidleitungsverbinder für Kühl- oder Heizsysteme, aufweisend ein Gehäuseteil mit mindestens zwei Anschlussbereichen zum jeweiligen Anschluss einer Fluidleitung, wobei die Anschlussbereiche über einen Fluidkanal in dem Gehäuseteil fluidisch verbunden sind. Zudem betrifft die Erfindung eine Fluidverbinderleiste für ein fluidisches Kühl- oder Heizsystem, aufweisend mindestens zwei miteinander fluidisch verbundene Fluidleitungsverbinder.

Derartige Fluidleitungsverbinder sind in großer Vielfalt allgemein bekannt und dienen insbesondere zum fluidischen Verbinden von Fluidleitungen von komplexen Fluidsystemen mit mehreren parallelen Fluidkreisläufen. Dabei werden oft mehrere Fluidleitungsverbinder zu einer Fluidverbinderleiste in Serie und/oder parallel verbunden. Die Fluidleitungsverbinder werden insbesondere als 90° oder 180° Verbinder mit zwei Anschlussbereichen, als T- oder Y-Verbinder mit drei Anschlussbereichen, aber auch als beliebig anders ausgebildete Verbinder mit mehr Anschlussbereichen verwendet.

Dabei werden die Fluidsysteme oft durch einen hydraulischen Abgleich strömungstechnisch optimiert, wobei die Durchlaufmengen und Geschwindigkeiten für die einzelnen Kreisläufe oder Aggregate des Fluidsystems angepasst werden. Dies erfolgt in der Regel durch aufwendige einstellbare Ventile oder durch die Verwendung von unterschiedlichen Leitungsquerschnitten der Fluidleitungen oder Reduzierstücke. Dabei haben Ventile den Nachteil, dass sie relativ aufwendig herzustellen und wartungsintensiv sind. Die Verwendung von unterschiedlichen Fluidleitungen mit unterschiedlichen Querschnitten hat den Nachteil, dass bei einer Änderung der Optimierung die oft aufwendig verlegten Fluidleitungen ausgetauscht werden müssen. Die zusätzlichen Reduzierstücke bedeuten einen zusätzlichen Montageaufwand.

GB 2 409 501 A offenbart ein Dreiwegeventil gemäß dem Oberbegriff vom Anspruch 1.

Der Erfindung liegt die Aufgabe zugrunde, einen Fluidleitungsverbinder und eine Fluidverbinderleiste zur Verfügung zu stellen, die einen hydraulischen Abgleich eines Fluidsystems mit möglichst geringem Montageaufwand und möglichst langlebigen Komponenten kostengünstig zu ermöglichen.

Die Aufgabe wird erfindungsgemäß durch einen Fluidleitungsverbinder mit den Merkmalen des kennzeichnenden Teils des Anspruchs 1 gelöst. Zudem wird die Aufgabe durch eine Fluidverbinderleiste gemäß Anspruch 13 gelöst.

Erfindungsgemäß weist das Gehäuseteil des Fluidleitungsverbinders mindestens eine mit dem Fluidkanal fluidisch verbundene Aufnahmeöffnung und ein in die Aufnahmeöffnung eingesetztes Einsatzteil auf. Das Einsatzteil ist in die Aufnahmeöffnung zunächst relativ zum Gehäuse derart verstellbar einsetzbar, dass es in Abhängigkeit der relativen Stellung zu dem Gehäuse eine effektive Querschnittsfläche mindestens eines Kanalabschnitts des Fluidkanals einstellt. Das Einsatzteil ist in einer festgelegten Stellung in der Aufnahmeöffnung fixiert und in der Aufnahmeöffnung gegenüber dem Gehäuse mediendicht abgedichtet. Dies hat den Vorteil, dass der Fluidleitungsverbinder mit identischen Gehäusen und identischen Anschlussabschnitten und Fluidkanälen, jedoch jeweils mit einer unterschiedlich eingestellten effektiven Querschnittfläche hergestellt werden kann. Für den hydraulischen Abgleich können dann die Fluidleitungsverbinder mit der entsprechend benötigten Querschnittsfläche verbaut werden. Die Montage weiterer Reduzierstücke oder die Verwendung von Ventilen entfällt. Bei einer Anpassung müssen lediglich die Fluidleitungsverbinder ausgetauscht werden. Die Fluidleitungsverbinder weisen keine beweglichen Teile auf und sind dadurch sehr langlebig und wartungsfrei.

Weitere vorteilhafte Ausgestaltungen der Erfindung ergeben sich aus der folgenden Figurenbeschreibung und den abhängigen Unteransprüchen.

Es zeigen:
- Fig. 1a: eine dreidimensionale Explosionsansicht eines erfindungsgemäßen Fluidleitungsverbinders mit nicht eingestecktem Einsatzteil,
- Fig. 1b: eine Seitenansicht des erfindungsgemäßen Fluidleitungsverbinders gemäß Fig. 1a,
- Fig. 1c: einen Querschnitt A-A durch den erfindungsgemäßen Fluidleitungsverbinder gemäß Fig. 1b,
- Fig. 1d: einen Querschnitt A-A durch den erfindungsgemäßen Fluidleitungsverbinder gemäß Fig. 1b mit eingesetztem Einsatzteil,
- Fig. 2a: einen Querschnitt durch ein Einsatzteil,
- Fig. 2b: eine Draufsicht auf die Kopfseite des Einsatzteils gemäß Fig. 2a,
- Fig. 2c: eine Seitenansicht auf das Einsatzteil gemäß Fig. 2a,
- Fig. 2d: eine Seitenansicht auf ein im Vergleich zu Fig. 2c um 90° gedrehtes Einsatzteil,
- Fig. 2e: eine Draufsicht auf die Unterseite des Einsatzteils gemäß Fig. 2a,
- Fig. 2f: eine Seitenansicht auf ein im Vergleich zu Fig. 2d um 180° gedrehtes Einsatzteil,
- Fig. 3a: eine dreidimensionale Darstellung eines Querschnitts eines erfindungsgemäßen Fluidleitungsverbinders mit eingesetztem Einsatzteil in einer maximal offenen relativen Stellung,
- Fig. 3b: eine dreidimensionale Darstellung eines Querschnitts eines erfindungsgemäßen Fluidleitungsverbinders mit eingesetztem Einsatzteil in einer gegenüber Fig. 3a um 45° gedrehten relativen Stellung,
- Fig. 3c: eine dreidimensionale Darstellung eines Querschnitts eines erfindungsgemäßen Fluidleitungsverbinders mit eingesetztem Einsatzteil in einer gegenüber Fig. 3a um 90° gedrehten relativen Stellung,
- Fig. 3d: eine dreidimensionale Darstellung eines Querschnitts eines erfindungsgemäßen Fluidleitungsverbinders mit eingesetztem Einsatzteil in einer gegenüber Fig. 3a um 135° gedrehten relativen Stellung,
- Fig. 4a: eine dreidimensionale Darstellung einer zweiten Ausführungsform eines erfindungsgemäßen Fluidleitungsverbinders mit eingestecktem Einsatzteil,
- Fig. 4b: eine Seitenansicht der zweiten Ausführungsform eines erfindungsgemäßen Fluidleitungsverbinders gemäß Fig. 4a,
- Fig. 4c: eine weitere Seitenansicht der zweiten Ausführungsform eines erfindungsgemäßen Fluidleitungsverbinders gemäß Fig. 4a,
- Fig. 4d: einen Querschnitt A-A der zweiten Ausführungsform eines erfindungsgemäßen Fluidleitungsverbinders gemäß Fig. 4c mit eingesetztem Einsatzteil und
- Fig. 5: eine dreidimensionale Darstellung einer dritten Ausführungsform eines erfindungsgemäßen Fluidverbinders mit zwei einteilig verbundenen Gehäuseteilen.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

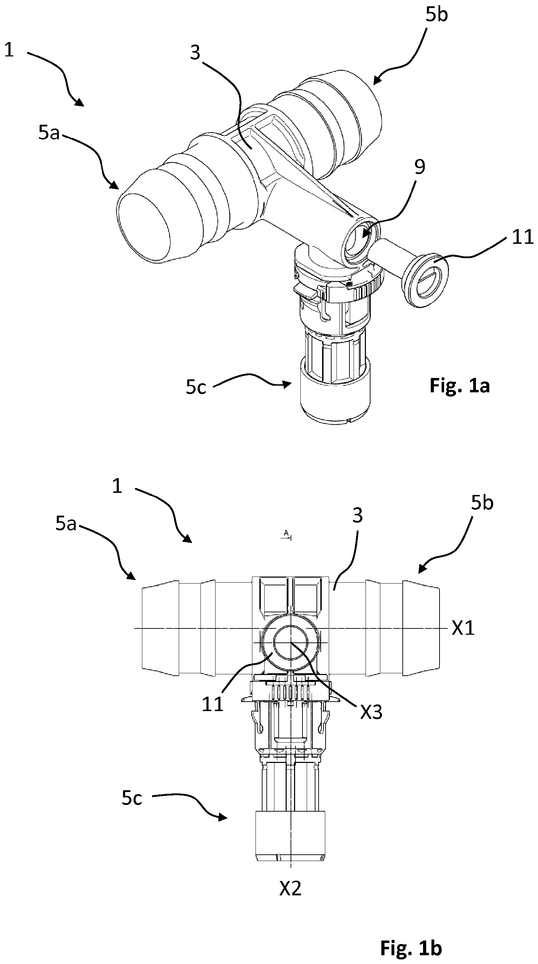

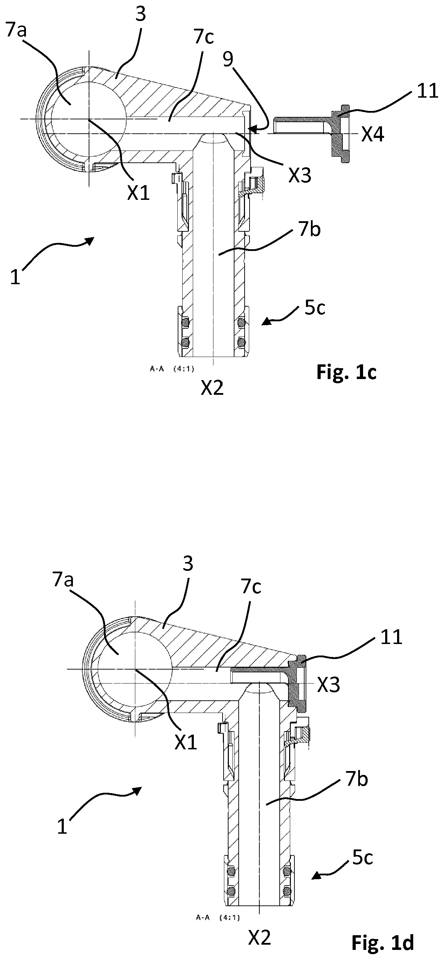

Figuren 1a, 1b, 1c und 1d zeigen verschiedene Ansichten eines erfindungsgemäßen Fluidleitungsverbinders 1. Der Fluidleitungsverbinder 1 ist vorzugsweise als ein T-förmiger Fluidleitungsverbinder 1 ausgebildet. Der Fluidleitungsverbinder 1 weist ein Gehäuseteil 3 auf. Das Gehäuseteil 3 weist insbesondere drei Anschlussabschnitte 5a, 5b, 5c zum Anschluss jeweils einer nicht dargestellten Fluidleitung auf. Die Anschlussabschnitte 5a, 5b, 5c können insbesondere als Steckabschnitte oder als Muffenabschnitte zum Anschluss der Fluidleitungen ausgebildet sein. In der in den Figuren 1a bis 1d dargestellten Ausführungsform sind insbesondere drei Anschlussabschnitte 5a, 5b, 5c als Steckabschnitte ausgebildet. Das Gehäuseteil 3 ist vorzugsweise einstückig ausgebildet und insbesondere aus Kunststoff gefertigt.

In dem Gehäuseteil 3 ist ein Fluidkanal ausgebildet, der die Anschlussabschnitte 5a, 5b, 5c fluidisch miteinander verbindet. Der Fluidkanal verbindet insbesondere den ersten Anschlussabschnitt 5a und den zweiten Anschlussabschnitt 5b mittels eines ersten Kanalabschnitts 7a. Der dritte Anschlussabschnitt 5c ist vorzugsweise über einen zweiten Kanalabschnitt 7b mit dem Fluidkanal verbunden.

Vorteilhafterweise weist der Fluidkanal zudem einen dritten Kanalabschnitt 7c auf, der zwischen dem ersten Kanalabschnitt 7a und dem zweiten Kanalabschnitt 7b angeordnet ist und diese fluidisch miteinander verbindet.

Der erste Kanalabschnitt 7a verläuft entlang einer ersten Kanalachse X1 und weist eine erste Querschnittsfläche auf. Der zweite Kanalabschnitt 7b verläuft entlang einer zweiten Kanalachse X2 und weist eine zweite Querschnittsfläche auf. Der dritte Kanalabschnitt 7c verläuft entlang einer dritten Kanalachse X3 und weist eine dritte Querschnittsfläche auf.

Vorzugsweise ist die erste Querschnittsfläche des ersten Kanalabschnitts 7a größer als die dritte Querschnittsfläche des dritten Kanalabschnitts 7c und größer als die zweite Querschnittsfläche des zweiten Kanalabschnitts 7b. Die zweite Querschnittsfläche des zweiten Kanalabschnitts 7b ist insbesondere der Größe nach gleich der dritten Querschnittsfläche des dritten Kanalabschnitts 7c.

Vorteilhafterweise ist der erste Kanalabschnitt 7a und der zweite Kanalabschnitt 7b derart zueinander angeordnet, dass die erste Kanalachse X1 des ersten Kanalabschnitts 7a und die zweite Kanalachse X2 des zweiten Kanalabschnitts 7b in zwei parallelen zueinander versetzten Ebenen verlaufen.

In einer bevorzugten und in Figur 1a bis 1d dargestellten Ausführungsform verlaufen die drei Kanalachsen X1, X2, X3 jeweils in einem Winkel von 90° zueinander. Alternativ kann jedoch auch die erste Kanalachse X1 zu der dritten Kanalachse X3 und/oder die zweite Kanalachse X2 zu der dritten Kanalachse X3 in einem Winkel >= 0° und < 180°, insbesondere 45° beziehungsweise 135° verlaufen.

Das Gehäuse 3 weist zudem mindestens eine Aufnahmeöffnung 9 zur Aufnahme eines Einsatzteils 11 auf. Die Aufnahmeöffnung 9 mündet in den Fluidkanal und ist vorzugsweise an dem dritten Kanalabschnitt 7c und insbesondere an einer Stirnwand des dritten Kanalabschnitts 7c angeordnet.

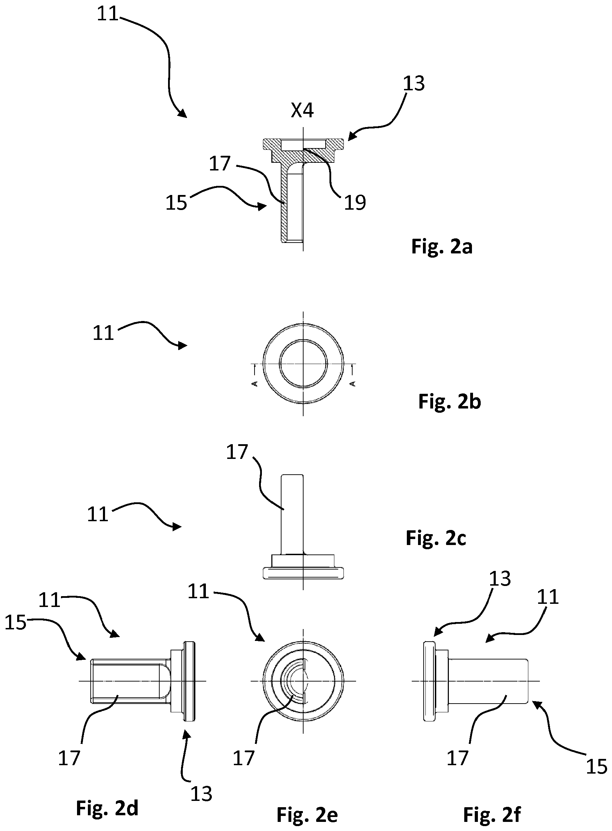

Figuren 2a bis 2f zeigen eine erfindungsgemäße Ausführungsform des Einsatzteils 11. Das Einsatzteil 11 ist derart ausgebildet, dass es während der Montage in mehrere unterschiedliche Stellungen relativ zum Gehäuse in die Aufnahmeöffnung 9 eingesetzt werden kann. Vorzugsweise ist das Einsatzteil 11 zylindrisch ausgebildet und während der Montage in der Aufnahmeöffnung 9 um die eigene Längsachse X4 verdrehbar in der Aufnahmeöffnung 9 gelagert. Nach der Montage ist das Einsatzteil 11 in der Aufnahmeöffnung 9 in einer relativen Stellung zum Gehäuse 3 fixiert. Dazu ist das Einsatzteil 11 mit dem Gehäuse 3 stoffschlüssig, insbesondere durch Laserschweißen oder Ultraschallschweißen, verbunden oder in dem Gehäuse 3 verstemmt. Das Einsatzteil 11 verschließt im in der Aufnahmeöffnung 9 eingesetzten und fixierten Zustand die Aufnahmeöffnung 9 mediendicht.

Das Einsatzteil 11 weist einen Kopfabschnitt 13 und einen Stellabschnitt 15 auf. Der Kopfabschnitt 13 ist in die Aufnahmeöffnung 9 eingesetzt und verschließt die Aufnahmeöffnung. Der Stellabschnitt 15 ragt in den Fluidkanal und ist derart ausgebildet und angeordnet, dass er je nach relativer Stellung des Einsatzteils 11 zu dem Gehäuse 3 die effektive Querschnittsfläche mindestens eines der Kanalabschnitte 7a, 7b, 7c verringert. Vorteilhafterweise ist das Einsatzteil 11 derart ausgebildet, dass durch die Verringerung der Querschnittsfläche eine Drosslung der Medienströmung zwischen 0 % und 90 % erfolgen kann.

Vorzugsweise ragt der Stellabschnitt 15 in den dritten Kanalabschnitt 7c ein und ist derart ausgebildet und angeordnet, dass er je nach relativer Stellung zu dem Gehäuse 3 die Mündung eines anderen Kanalabschnitts 7a, 7b, insbesondere des zweiten Kanalabschnitts 7b, in den dritten Kanalabschnitt 7c vollständig öffnet oder teilweise verschließt. In einer vorteilhaften Ausführungsform des Einsatzteils 11 ist der Stellabschnitt 15 teilrohrförmig, insbesondere als halber Rohrstutzen 17 ausgebildet.

In einer weiteren Ausführungsform weist der Kopfabschnitt 13 an seiner der Aufnahmeöffnung 9 des Gehäuses abgewandten Seite ein Kennzeichnungsmittel, insbesondere eine Abstufung 19 oder eine/einen oder mehrere Nuten oder Nocken auf, mittels der die relative Stellung des Einsatzteils 11 in der Aufnahmeöffnung 9 ablesbar ist. Vorteilhafterweise weist das Gehäuse 3 im Randbereich der Aufnahmeöffnung 9 ebenfalls ein Kennzeichnungsmittel, insbesondere eine/einen oder mehrere Nuten oder Nocken auf, wobei die Kennzeichnungsmittel des Gehäuses 3 auf das Kennzeichnungsmittel des Kopfabschnitts 13 entsprechend abgestimmt sind.

Bevorzugt ist das Kennzeichnungsmittel eine Skala, welche mit einer dazu korrespondierenden Kennzeichnung auf dem Gehäuse 3 die relative Stellung des Einsatzteils 11 in der Aufnahmeöffnung 9 anzeigt, besonders bevorzugt kennzeichnet die Skala unterschiedliche effektive Querschnittsflächen für eine Drosselung der Medienströmung zwischen 0 % und 90 %.

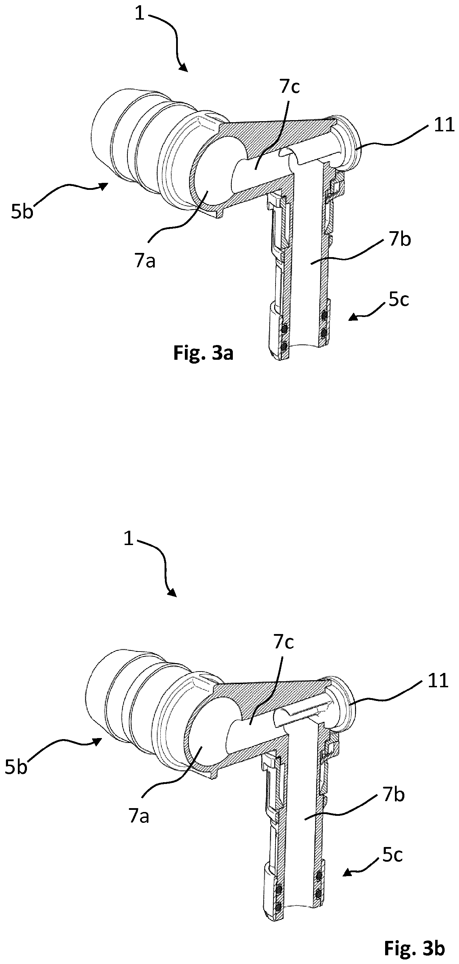

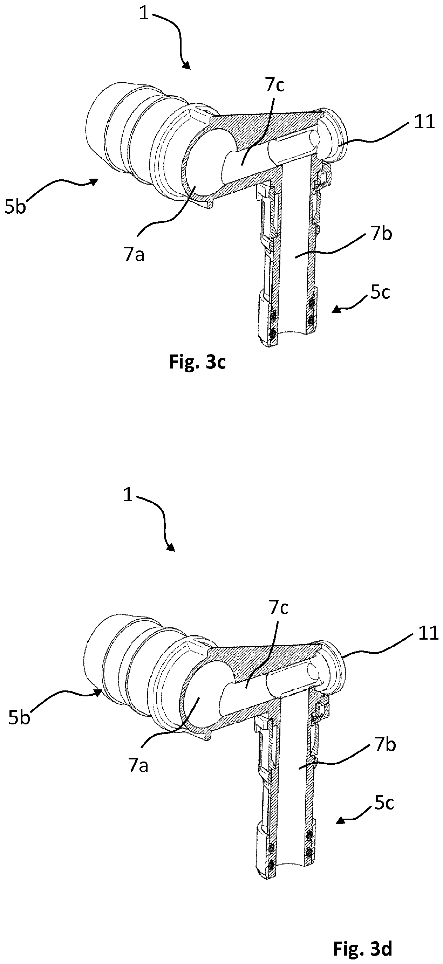

In den Figuren 3a bis 3d sind mehrere verschiedene beispielhafte erfindungsgemäße Fluidleitungsverbinder 1 mit dem grundsätzlich gleichen Aufbau gemäß den Figuren 1a bis 1d dargestellt, die sich lediglich in der relativen Stellung des fixierten Einsatzteils 11 in der Aufnahmeöffnung 9 zu dem Gehäuse 3 unterscheiden. In der Figur 3a ist das Einsatzteil 11 derart fixiert, dass der Stellabschnitt 15 keinen Bereich einer Mündung des zweiten Kanalabschnitts 7b abdeckt. Somit steht die volle Querschnittsfläche des zweiten Kanalabschnitts 7b effektiv zur Verfügung. In Figur 3b ist das Einsatzteil 11 mit dem Stellabschnitt 15 um 45° verdreht fixiert. Der Stellabschnitt 15 verdeckt die Mündung des zweiten Kanalabschnitts 7b um etwa ein Viertel. Dadurch wird die effektive Querschnittsfläche des zweiten Kanalabschnitts 7b reduziert. In Figur 3c ist das Einsatzteil 11 mit dem Stellabschnitt 15 um 90° verdreht fixiert. Der Stellabschnitt 15 verdeckt die Mündung des zweiten Kanalabschnitts 7b halb. Dadurch wird die effektive Querschnittsfläche des zweiten Kanalabschnitts 7b halbiert. In Figur 3d ist das Einsatzteil 11 mit dem Stellabschnitt 15 um 135° verdreht fixiert. Der Stellabschnitt 15 verdeckt die Mündung des zweiten Kanalabschnitts 7b um etwa drei Viertel. Dadurch wird die effektive Querschnittsfläche des zweiten Kanalabschnitts 7b weiterhin reduziert.

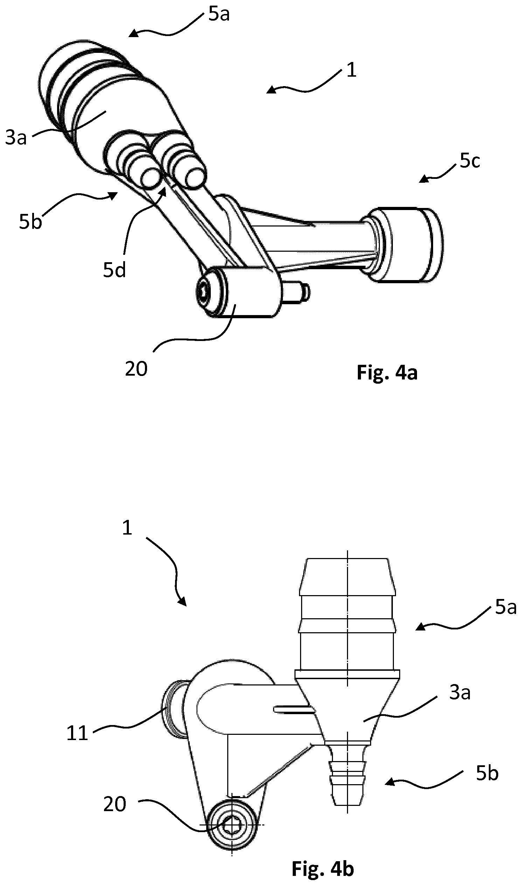

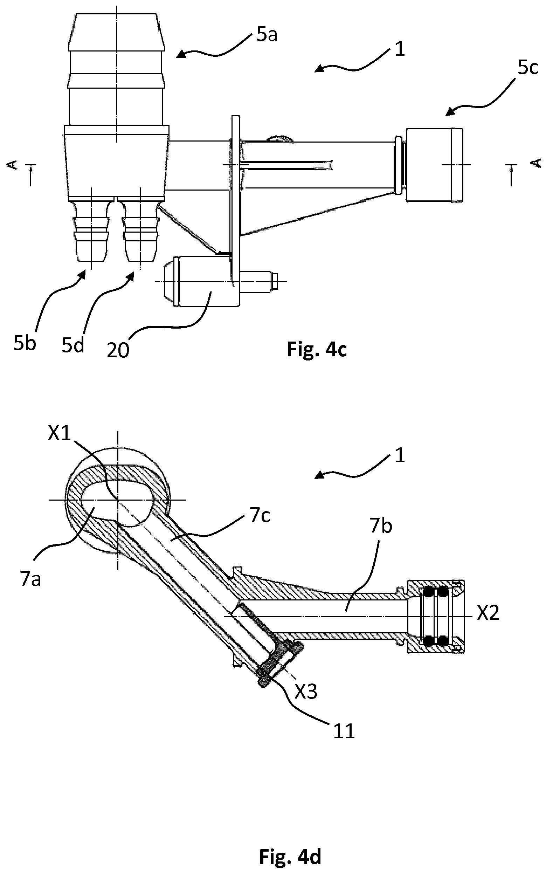

In den Figuren 4a bis 4d ist eine zweite Ausführungsform eines erfindungsgemäßen Fluidleitungsverbinders 1 dargestellt. Das Gehäuseteil 3a weist vier Anschlussabschnitte 5a, 5b, 5c, 5d auf, wobei der erste Anschlussabschnitt 5a, der zweite Anschlussabschnitt 5b und der vierte Anschlussabschnitt 5d unmittelbar an dem ersten Kanalabschnitt 7a des Fluidkanals angeordnet sind, und der dritte Anschlussabschnitt 5c an dem zweiten Kanalabschnitt 7b angeordnet ist. Der erste Kanalabschnitt 7a und der zweite Kanalabschnitt 7b sind über einen dritten Kanalabschnitt 7c miteinander fluidisch verbunden. An dem dritten Kanalabschnitt 7c ist das Einsatzteil 11 angeordnet.

Der erste Kanalabschnitt 7a und der zweite Kanalabschnitt 7b sind derart zueinander angeordnet, dass die erste Kanalachse X1 des ersten Kanalabschnitts 7a und die zweite Kanalachse X2 des zweiten Kanalabschnitts 7b in zwei parallelen, zueinander versetzten Ebenen verlaufen. In dieser Ausführungsform verläuft die erste Kanalachse X1 zu der dritten Kanalachse X3 in einem Winkel von 45° und die zweite Kanalachse X2 zu der dritten Kanalachse X3 in einem Winkel von 135°.

Das Einsatzteil 11 ist derart in einer relativen Stellung in der Aufnahmeöffnung 9 fixiert, dass es die Mündung des zweiten Kanalabschnitts 7b teilweise verdeckt und somit die effektive Querschnittsfläche des zweiten Kanalabschnitts 7b reduziert.

Vorzugsweise weist der Fluidverbinder 1, insbesondere das Gehäuseteil 3a, ein Verbindungsmittel 20 auf, durch welches der Fluidverbinder 1 z. B. in einer Verteilerleiste befestigt, bevorzugt verschraubt werden kann. Vorteilhaft ist das Verbindungsmittel 20 an einem von dem Gehäuseteil 3a abweisenden Steg angeordnet.

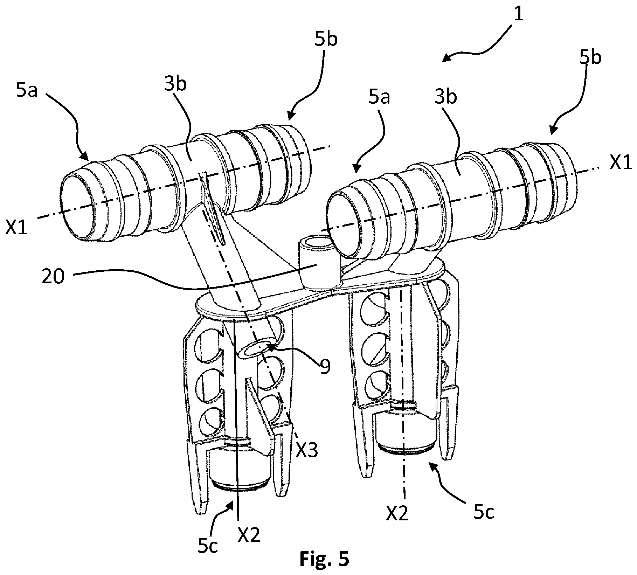

In Figur 5 ist eine dritte Ausführungsform eines erfindungsgemäßen Fluidleitungsverbinders 1 dargestellt. Vorteilhaft weist der Fluidverbinder ein erstes Gehäuseteil 3b und ein zweites Gehäuseteil 3b auf, wobei das erste Gehäuseteil 3b drei Anschlussabschnitte 5a, 5b, 5c und das zweite Gehäuseteil 3b ebenfalls drei Anschlussabschnitte 5a, 5b, 5c aufweist. Insbesondere sind die jeweiligen Anschlussabschnitte 5a, 5b, 5c als Steckabschnitte oder als Muffenabschnitte zum Anschluss der Fluidleitungen ausgebildet.

Das erste Gehäuseteil 3b und das zweite Gehäuseteil 3b sind vorzugsweise zusammen einteilig geformt ausgebildet und insbesondere aus Kunststoff in einem Spritzgussverfahren gefertigt. Dabei sind die Gehäuseteile 3b vorzugsweise, wie in Figur 5 dargestellt, mittels eines vorzugsweise einteilig angeformten Steges miteinander verbunden, wobei in einer besonders bevorzugten Ausführung der Steg ein Verbindungselement 20 aufweist, durch welches der Fluidverbinder 1 z. B. in einer Verteilerleiste befestigt, bevorzugt verschraubt werden kann.

In den Gehäuseteilen 3b ist jeweils ein Fluidkanal ausgebildet, der die jeweiligen Anschlussabschnitte 5a, 5b, 5c fluidisch miteinander verbindet.

In der in Figur 5 dargestellten Ausführungsform sind die ersten Anschlussabschnitte 5a und die zweiten Anschlussabschnitte 5b des ersten bzw. des zweiten Gehäuseteils 3b jeweils unmittelbar an dem entlang einer ersten Kanalachse X1 verlaufenden ersten Kanalabschnitt des Fluidkanals des jeweiligen Gehäuseteils 3b angeordnet, und der dritte Anschlussabschnitt 5c ist jeweils an dem entlang einer zweiten Kanalachse X2 verlaufenden zweiten Kanalabschnitt des jeweiligen Gehäuseteils 3b angeordnet. Die ersten Kanalabschnitte und die zweiten Kanalabschnitte des ersten und des zweiten Gehäuseteils 3b sind jeweils über einen entlang einer dritten Kanalachse X3 verlaufenden dritten Kanalabschnitt miteinander fluidisch verbunden, wobei der dritte Kanalabschnitt des ersten und des zweiten Gehäuseteils 3b jeweils eine Aufnahmeöffnung 9 für ein nicht dargestelltes Einsatzteil 11 aufweist.

In der in Figur 5 dargestellten Ausführungsform verlaufen die ersten Kanalachsen X1 jeweils zu der dritten Kanalachse X3 insbesondere in einem Winkel von > 0° und < 180 °, vorzugsweise 45° und die zweiten Kanalachsen X2 insbesondere jeweils zu der dritten Kanalachse X3 in einem Winkel von > 0° und < 180 °, vorzugsweise 135°. Insbesondere verläuft die erste Kanalachse X1 des ersten Gehäuseteils 3b parallel versetzt und in einer Ebene zur ersten Kanalachse X1 des zweiten Gehäuseteils 3b und die zweite Kanalachse X2 des ersten Gehäuseteils 3b parallel versetzt und in einer Ebene zur zweiten Kanalachse X2 des zweiten Gehäuseteils 3b.

In der in Figur 5 dargestellten Ausführungsform werden die nicht dargestellten Einsatzteile 11 jeweils in das erste und das zweite Gehäuseteil 3b, wie bei der zweiten Ausführungsform gemäß den Figuren 4a bis 4d, derart in einer relativen Stellung in der Aufnahmeöffnung 9 fixiert, dass es die Mündung des zweiten Kanalabschnitts teilweise verdeckt und somit die effektive Querschnittsfläche des zweiten Kanalabschnitts des jeweiligen Gehäuseteils 3b reduziert.

Alternativ entsprechen das erste und/oder das zweite Gehäuseteil 3b insbesondere der ersten Ausführungsform gemäß den Figuren 1a bis 1d bzw. 3a bis 3d oder der zweiten Ausführungsform gemäß den Figuren 4a bis 4d. Insbesondere kann das erste Gehäuseteil 3b eine anderen Ausführungsform als das zweite Gehäuseteil 3b aufweisen.

Unabhängig von der in Figur 5 dargestellten und beschriebenen Ausführung des Fluidverbinders 1 kann dieser, insbesondere die erste und/oder zweite Gehäusehälfte 3b, sämtliche vorteilhaften Merkmale der oben beschriebenen und in den Figuren 1a bis 4d dargestellten Ausführungsformen aufweisen.

Besonders vorteilhaft ermöglicht die dritte Ausführungsform, wie sie in Figur 5 dargestellt ist, mit einen Fluidverbinder 1, der zwei Gehäuseteile 3b aufweist, eine Anordnung, insbesondere in einer Verteilerleiste, bei der die Verteilerleisten parallel zueinander verlaufen, um beispielsweise einen Vor- und einen Rücklauf zu bilden. Das wird dadurch ermöglicht, weil das erste und das zweite Gehäuseteil 3b mit zwei voneinander getrennten Fluidkreisläufen verbunden werden können.

Vorteilhaft kann an einem oder an mehreren der Anschlussabschnitte 5a, 5b, 5c, 5d ein Endstück montiert, insbesondere stoffschlüssig verbunden, bevorzugt lasergeschweißt, sein. Das Endstück verschließt dabei fluiddicht einen oder mehrere Anschlussabschnitte 5a, 5b, 5c, 5d.

Bevorzugt weist eine erfindungsgemäße Fluidverbinderleiste für ein fluidisches Kühl- oder Heizsystem mindestens zwei miteinander fluidisch verbundene erfindungsgemäße Fluidleitungsverbinder 1 auf. Insbesondere sind die Einsatzteile 11 von mindestens zwei der Fluidleitungsverbinder 1 in einer voneinander unterschiedlichen relativen Stellung fixiert.

Gemäß einer vorteilhaften Ausführung der Fluidverbinderleiste sind mindestens zwei Anschlussabschnitte 5a, 5b, 5c, 5d verschiedener Fluidverbinder 1 mittels flexibler Kunststoffrohre miteinander verbunden. Dadurch wird die Flexibilität des Fluidverbinders 1 bzw. einer aus mehreren Fluidverbindern 1 zusammengesetzten Verteilerleiste erhöht.

Die Erfindung ist nicht auf die dargestellten und beschriebenen Ausführungsbeispiele beschränkt, sondern umfasst auch alle im Sinne der Erfindung gleichwirkenden Ausführungen.

### Bezugszeichenliste

- 1: Fluidleitungsverbinder
- 3, 3a, 3b: Gehäuseteil
- 5a: erster Anschlussbereich
- 5b: zweiter Anschlussbereich
- 5c: dritter Anschlussbereich
- 7a: erster Kanalabschnitt
- 7b: zweiter Kanalabschnitt
- 7c: dritter Kanalabschnitt
- 9: Aufnahmeöffnung
- 11: Einsatzteil
- 13: Kopfabschnitt
- 15: Stellabschnitt
- 17: halber Rohrstutzen
- 19: Kennzeichnungsmittel

- X1, X2, X3: Kanalachse
- X4: Längsachse Einsatzteil

## Patentansprüche

1. Fluidleitungsverbinder (1) für Kühl- oder Heizsysteme, aufweisend ein Gehäuseteil (3) mit mindestens zwei Anschlussbereichen (5a, 5b, 5c, 5d) zum jeweiligen Anschluss einer Fluidleitung, wobei die Anschlussbereiche (5a, 5b, 5c, 5d) über einen Fluidkanal in dem Gehäuseteil (3) fluidisch verbunden sind, wobei das Gehäuseteil (3) mindestens eine mit dem Fluidkanal (7) fluidisch verbundene Aufnahmeöffnung (9) und ein in die Aufnahmeöffnung (9) eingesetztes Einsatzteil (11) aufweist, und das Einsatzteil (11) in die Aufnahmeöffnung (9) zunächst relativ zum Gehäuseteil (3) derart verstellbar einsetzbar ist, dass es in Abhängigkeit der relativen Stellung zu dem Gehäuseteil (3) eine effektive Querschnittsfläche mindestens eines Kanalabschnitts (7a, 7b, 7c) des Fluidkanals einstellt und das Einsatzteil (11) in einer festgelegten Stellung in der Aufnahmeöffnung (9) fixiert ist, wobei das Einsatzteil (11) in der Aufnahmeöffnung (9) gegenüber dem Gehäuseteil (3) mediendicht abgedichtet ist und das Einsatzteil (11) einen Stellabschnitt (15) aufweist, der in den Fluidkanal ragt und derart ausgebildet und angeordnet ist, dass er je nach relativer Stellung des Einsatzteils (11) zu dem Gehäuseteil (3) die effektive Querschnittsfläche mindestens eines Kanalabschnitts (7a, 7b, 7c) des Fluidkanals verringert,
**dadurch gekennzeichnet, dass**
der Stellabschnitt (15) des Einsatzteils (11) als ein einseitig an einer Stirnseite verschlossenes Teilrohrstück ausgebildet ist.

2. Fluidleitungsverbinder (1) nach Anspruch 1,
**dadurch gekennzeichnet, dass**
das Einsatzteil (11) an seiner der Aufnahmeöffnung (9) abgewandten Seite Kennzeichnungsmittel zur Kennzeichnung der relativen Stellung des Einsatzteils (11) zu dem Gehäuseteil (3) in der Aufnahmeöffnung (9) aufweist.

3. Fluidleitungsverbinder (1) nach Anspruch 2,
**dadurch gekennzeichnet, dass**
das Kennzeichnungsmittel eine Skala ist, welche mit einer dazu korrespondierenden Kennzeichnung auf dem Gehäuseteil (3) die relative Stellung des Einsatzteils (11) in der Aufnahmeöffnung (9) anzeigt.

4. Fluidleitungsverbinder (1) nach einem der Ansprüche 1 bis 3,
**dadurch gekennzeichnet, dass**
das Gehäuseteil (3) und das Einsatzteil (11) jeweils einstückig aus Kunststoff ausgebildet sind.

5. Fluidleitungsverbinder (1) nach einem der Ansprüche 1 bis 4,
**dadurch gekennzeichnet, dass**
das Einsatzteil (11) in dem Gehäuseteil (3) verstemmt ist und dadurch in der Aufnahmeöffnung (9) in einer relativen Stellung zum Gehäuse fixiert ist und mit in der Aufnahmeöffnung (9) umlaufenden Dichtmitteln abgedichtet ist.

6. Fluidleitungsverbinder (1) nach einem der Ansprüche 1 bis 4,
**dadurch gekennzeichnet, dass**
das Einsatzteil (11) mit dem Gehäuseteil (3) durch eine stoffschlüssige Verbindung fixiert und abgedichtet ist.

7. Fluidleitungsverbinder (1) nach Anspruch 6,
**dadurch gekennzeichnet, dass**
das Einsatzteil (11) mit dem Gehäuseteil (3) durch Laserschweißen oder Ultraschallschweißen fixiert und abgedichtet ist.

8. Fluidleitungsverbinder (1) nach einem der Ansprüche 1 bis 7,
**dadurch gekennzeichnet, dass**
der Stellabschnitt des Einsatzteils (11) als ein einseitig an einer Stirnseite verschlossenes halbes Rohrstück ausgebildet ist.

9. Fluidleitungsverbinder (1) nach einem der Ansprüche 1 bis 8,
**dadurch gekennzeichnet, dass**
der Fluidkanal aus drei Kanalabschnitten (7a, 7b, 7c) gebildet ist, und der erste Kanalabschnitt (7a) über den dritten Kanalabschnitt (7c) mit dem zweiten Kanalabschnitt (7b) fluidisch verbunden ist, und der erste Kanalabschnitt (7a) und der zweite Kanalabschnitt (7b) derart zueinander angeordnet sind, dass eine erste Kanalachse (X1) des ersten Kanalabschnitts (7a) und eine zweite Kanalachse (X2) des zweiten Kanalabschnitts (7b) in zwei parallelen, zueinander versetzten Ebenen verlaufen.

10. Fluidleitungsverbinder (1) nach einem der Ansprüche 1 bis 9,
**gekennzeichnet durch**
ein erstes Gehäuseteil (3b) und ein zweites Gehäuseteil (3b), wobei das erste Gehäuseteil (3b) drei Anschlussabschnitte (5a, 5b, 5c) und das zweite Gehäuseteil (3b) ebenfalls drei Anschlussabschnitte (5a, 5b, 5c) aufweist und die ersten Anschlussabschnitte (5a) und die zweiten Anschlussabschnitte (5b) des ersten bzw. des zweiten Gehäuseteils (3b) jeweils unmittelbar an dem entlang einer ersten Kanalachse (X1) verlaufenden ersten Kanalabschnitt des Fluidkanals des jeweiligen Gehäuseteils (3b) angeordnet ist, und der dritte Anschlussabschnitt (5c) jeweils an dem entlang einer zweiten Kanalachse (X2) verlaufenden zweiten Kanalabschnitt des jeweiligen Gehäuseteils (3b) angeordnet ist, wobei die ersten Kanalabschnitte und die zweiten Kanalabschnitte des ersten und des zweiten Gehäuseteils (3b) jeweils über einen entlang einer dritten Kanalachse (X3) verlaufenden dritten Kanalabschnitt miteinander fluidisch verbunden sind, wobei der dritte Kanalabschnitt des ersten und des zweiten Gehäuseteils (3b) jeweils eine Aufnahmeöffnung (9) für ein nicht dargestelltes Einsatzteil (11) aufweist.

11. Fluidleitungsverbinder (1) nach Anspruch 10,
**dadurch gekennzeichnet, dass**
das erste Gehäuseteil (3b) und das zweite Gehäuseteil (3b) einteilig geformt ausgebildet und aus Kunststoff in einem Spritzgussverfahren gefertigt sind, wobei die Gehäuseteile (3b) mittels eines einteilig angeformten Steges miteinander verbunden sind.

12. Fluidleitungsverbinder (1) nach Anspruch 10 oder 11,
**dadurch gekennzeichnet, dass** die erste Kanalachse (X1) des ersten Gehäuseteils (3b) parallel versetzt und in einer Ebene zur ersten Kanalachse (X1) des zweiten Gehäuseteils (3b), und die zweite Kanalachse (X2) des ersten Gehäuseteils (3b) parallel versetzt und in einer Ebene zur zweiten Kanalachse (X2) des zweiten Gehäuseteils (3b) verläuft.

13. Fluidverbinderleiste für ein fluidisches Kühl- oder Heizsystem, aufweisend mindestens zwei miteinander fluidisch verbundene Fluidleitungsverbinder (1) nach einem der Ansprüche 1 bis 12,
**dadurch gekennzeichnet, dass**
die Einsatzteile (11) von mindestens zwei der Fluidleitungsverbinder (1) in einer voneinander unterschiedlichen relativen Stellung fixiert sind.

14. Fluidverbinderleiste nach Anspruch 13,
**dadurch gekennzeichnet, dass**
mindestens zwei Anschlussabschnitte (5a, 5b, 5c, 5d) verschiedener Fluidverbinder (1) mittels flexibler Kunststoffrohre miteinander verbunden sind.

## Claims

1. Fluid line connector (1) for cooling or heating systems, having a housing part (3) with at least two connection regions (5a, 5b, 5c, 5d) for respective connection of a fluid line, wherein the connection regions (5a, 5b, 5c, 5d) are connected fluidically via a fluid channel in the housing part (3), wherein the housing part (3) has at least one receiving opening (9), which is connected fluidically to the fluid channel (7), and one insert part (11), which is inserted into the receiving opening (9), and the insert part (11) can be inserted into the receiving opening (9) so as to be adjustable relative to the housing part (3) initially in such a way that it sets, in a manner dependent on the relative position with respect to the housing part (3), an effective cross-sectional area of at least one channel section (7a, 7b, 7c) of the fluid channel, and the insert part (11) is fixed in the receiving opening (9) in a fixed position, wherein the insert part (11), in the receiving opening (9), is sealed in a media-tight manner with respect to the housing part (3), and the insert part (11) has an adjustment section (15) which projects into the fluid channel and which is formed and arranged in such a way that it reduces the effective cross-sectional area of at least one channel section (7a, 7b, 7c) of the fluid channel according to the relative position of the insert part (11) with respect to the housing part (3),
**characterized in that**
the adjustment section (15) of the insert part (11) is formed as a partial tube piece which is closed off at one side at a face side.

2. Fluid line connector (1) according to Claim 1,
**characterized in that**
the insert part (11) has on its side facing away from the receiving opening (9) identification means for identifying the relative position of the insert part (11) with respect to the housing part (3) in the receiving opening (9).

3. Fluid line connector (1) according to Claim 2,
**characterized in that**
the identification means is a scale which indicates, with a corresponding identification means on the housing part (3), the relative position of the insert part (11) in the receiving opening (9).

4. Fluid line connector (1) according to one of Claims 1 to 3,
**characterized in that**
the housing part (3) and the insert part (11) are each formed in one piece from plastic.

5. Fluid line connector (1) according to one of Claims 1 to 4,
**characterized in that**
the insert part (11) is calked in the housing part (3) and, thus, is fixed in a relative position with respect to the housing in the receiving opening (9) and is sealed off by way of peripheral sealing means in the receiving opening (9).

6. Fluid line connector (1) according to one of Claims 1 to 4,
**characterized in that**
the insert part (11), with respect to the housing part (3), is fixed by way of a materially bonded connection and is sealed off.

7. Fluid line connector (1) according to Claim 6,
**characterized in that**
the insert part (11), with respect to the housing part (3), is fixed by way of laser welding or ultrasonic welding and is sealed off.

8. Fluid line connector (1) according to one of Claims 1 to 7,
**characterized in that**
the adjustment section of the insert part (11) is formed as a half-tube piece which is closed off at one side at a face side.

9. Fluid line connector (1) according to one of Claims 1 to 8,
**characterized in that**
the fluid channel is formed from three channel sections (7a, 7b, 7c), and the first channel section (7a) is connected fluidically to the second channel section (7b) via the third channel section (7c), and the first channel section (7a) and the second channel section (7b) are arranged with respect to one another in such a way that a first channel axis (X1) of the first channel section (7a) and a second channel axis (X2) of the second channel section (7b) lie in two parallel, mutually offset planes.

10. Fluid line connector (1) according to one of Claims 1 to 9,
**characterized by**
a first housing part (3b) and a second housing part (3b), wherein the first housing part (3b) has three connection sections (5a, 5b, 5c) and the second housing part (3b) likewise has three connection sections (5a, 5b, 5c), and the first connection sections (5a) and the second connection sections (5b) of the first and second housing parts (3b) are in each case arranged directly at the first channel section, extending along a first channel axis (X1), of the fluid channel of the respective housing part (3b), and the third connection section (5c) is in each case arranged at the second channel section, extending along a second channel axis (X2), of the respective housing part (3b), wherein the first channel sections and second channel sections of the first and second housing parts (3b) are in each case connected fluidically to one another via a third channel section extending along a third channel axis (X3), wherein the third channel section of the first and second housing parts (3b) has in each case one receiving opening (9) for an insert part (11) (not illustrated).

11. Fluid line connector (1) according to Claim 10,
**characterized in that**
the first housing part (3b) and the second housing part (3b) are formed integrally and are manufactured from plastic in an injection-moulding process, wherein the housing parts (3b) are connected to one another by means of a web formed integrally thereon.

12. Fluid line connector (1) according to Claim 10 or 11,
**characterized in that**
the first channel axis (X1) of the first housing part (3b) is offset in a parallel manner and lies in a plane with respect to the first channel axis (X1) of the second housing part (3b), and the second channel axis (X2) of the first housing part (3b) is offset in a parallel manner and lies in a plane with respect to the second channel axis (X2) of the second housing part (3b).

13. Fluid connector block for a fluidic cooling or heating system, having at least two fluid line connectors (1) connected fluidically to one another according to one of Claims 1 to 12,
**characterized in that**
the insert parts (11) of at least two of the fluid line connectors (1) are fixed in a mutually different relative position.

14. Fluid connector block according to Claim 13,
**characterized in that**
at least two connection sections (5a, 5b, 5c, 5d) of different fluid connectors (1) are connected to one another by means of flexible plastic tubes.

## Revendications

1. Connecteur de conduites de fluide (1) pour systèmes de chauffage ou de refroidissement, comprenant une partie de boîtier (3) dotée d'au moins deux régions de raccordement (5a, 5b, 5c, 5d) pour le raccordement respectif d'une conduite de fluide, les régions de raccordement (5a, 5b, 5c, 5d) étant connectées fluidiquement dans la partie de boîtier (3) par le biais d'un canal de fluide, la partie de boîtier (3) comprenant au moins une ouverture de réception (9) connectée fluidiquement au canal de fluide (7) et une partie d'insertion (11) insérée dans l'ouverture de réception (9), et la partie d'insertion (11) pouvant être insérée dans l'ouverture de réception (9) de manière déplaçable tout d'abord relativement à la partie de boîtier (3) de telle sorte qu'en fonction de la position relative par rapport à la partie de boîtier (3) elle règle une aire en section transversale effective d'au moins une section de canal (7a, 7b, 7c) du canal de fluide et que la partie d'insertion (11) soit fixée dans l'ouverture de réception (9) dans une position déterminée, la partie d'insertion (11) étant rendue étanche aux fluides par rapport à la partie de boîtier (3) dans l'ouverture de réception (9) et la partie d'insertion (11) comprenant une section de réglage (15) qui fait saillie dans le canal de fluide et est réalisée et disposée de telle sorte qu'en fonction de la position relative de la partie d'insertion (11) par rapport à la partie de boîtier (3) elle diminue l'aire en section transversale effective d'au moins une section de canal (7a, 7b, 7c) du canal de fluide,
**caractérisé en ce que**
la section de réglage (15) de la partie d'insertion (11) est réalisée sous la forme d'une pièce tubulaire partielle fermée d'un côté au niveau d'un côté frontal.

2. Connecteur de conduites de fluide (1) selon la revendication 1,
**caractérisé en ce que**
la partie d'insertion (11) comprend, sur son côté opposé à l'ouverture de réception (9), des moyens de repérage pour le repérage de la position relative de la partie d'insertion (11) par rapport à la partie de boîtier (3) dans l'ouverture de réception (9).

3. Connecteur de conduites de fluide (1) selon la revendication 2,
**caractérisé en ce que**
le moyen de repérage est une graduation, laquelle indique avec un repérage correspondant à celle-ci sur la partie de boîtier (3) la position relative de la partie d'insertion (11) dans l'ouverture de réception (9).

4. Connecteur de conduites de fluide (1) selon l'une des revendications 1 à 3,
**caractérisé en ce que**
la partie de boîtier (3) et la partie d'insertion (11) sont réalisées respectivement d'une seule pièce à partir de matière synthétique.

5. Connecteur de conduites de fluide (1) selon l'une des revendications 1 à 4,
**caractérisé en ce que**
la partie d'insertion (11) est matée dans la partie de boîtier (3) et est ainsi fixée dans l'ouverture de réception (9) dans une position relative par rapport au boîtier et est rendue étanche à l'aide de moyens d'étanchéité périphériques dans l'ouverture de réception (9) .

6. Connecteur de conduites de fluide (1) selon l'une des revendications 1 à 4,
**caractérisé en ce que**
la partie d'insertion (11) est fixée à la partie de boîtier (3) par une liaison de matière et rendue étanche.

7. Connecteur de conduites de fluide (1) selon la revendication 6,
**caractérisé en ce que**
la partie d'insertion (11) est fixée à la partie de boîtier (3) par soudage au laser ou par soudage par ultrasons et rendue étanche.

8. Connecteur de conduites de fluide (1) selon l'une des revendications 1 à 7,
**caractérisé en ce que**
la section de réglage de la partie d'insertion (11) est réalisée sous la forme d'une demi-pièce tubulaire fermée d'un côté au niveau d'un côté frontal.

9. Connecteur de conduites de fluide (1) selon l'une des revendications 1 à 8,
**caractérisé en ce que**
le canal de fluide est formé à partir de trois sections de canal (7a, 7b, 7c), et la première section de canal (7a) est connectée fluidiquement à la deuxième section de canal (7b) par le biais de la troisième section de canal (7c), et la première section de canal (7a) et la deuxième section de canal (7b) sont disposées l'une par rapport à l'autre, de telle sorte qu'un premier axe de canal (X1) de la première section de canal (7a) et un deuxième axe de canal (X2) de la deuxième section de canal (7b) s'étendent dans deux plans parallèles décalés l'un par rapport à l'autre.

10. Connecteur de conduites de fluide (1) selon l'une des revendications 1 à 9,
**caractérisé par**
une première partie de boîtier (3b) et une deuxième partie de boîtier (3b), la première partie de boîtier (3b) comprenant trois sections de raccordement (5a, 5b, 5c) et la deuxième partie de boîtier (3b) comprenant également trois sections de raccordement (5a, 5b, 5c) et les premières sections de raccordement (5a) et les deuxièmes sections de raccordement (5b) de la première et de la deuxième partie de boîtier (3b) étant disposées respectivement directement au niveau de la première section de canal, s'étendant le long d'un premier axe de canal (X1), du canal de fluide de la partie de boîtier (3b) respective, et la troisième section de raccordement (5c) étant disposée respectivement au niveau de la deuxième section de canal, s'étendant le long d'un deuxième axe de canal (X2), de la partie de boîtier (3b) respective, les premières sections de canal et les deuxièmes sections de canal de la première et de la deuxième partie de boîtier (3b) étant connectées fluidiquement les unes aux autres respectivement par le biais d'une troisième section de canal s'étendant le long d'un troisième axe de canal (X3), la troisième section de canal de la première et de la deuxième partie de boîtier (3b) comprenant respectivement une ouverture de réception (9) pour une partie d'insertion (11) non représentée.

11. Connecteur de conduites de fluide (1) selon la revendication 10,
**caractérisé en ce que**
la première partie de boîtier (3b) et la deuxième partie de boîtier (3b) sont réalisées de manière formée d'un seul tenant et sont fabriquées à partir de matière synthétique dans un procédé de moulage par injection, les parties de boîtier (3b) étant connectées l'une à l'autre au moyen d'un élément jointif formé d'un seul tenant.

12. Connecteur de conduites de fluide (1) selon la revendication 10 ou 11,
**caractérisé en ce que**
le premier axe de canal (X1) de la première partie de boîtier (3b) s'étend de manière décalée parallèlement et dans un plan par rapport au premier axe de canal (X1) de la deuxième partie de boîtier (3b), et le deuxième axe de canal (X2) de la première partie de boîtier (3b) s'étend de manière décalée parallèlement et dans un plan par rapport au deuxième axe de canal (X2) de la deuxième partie de boîtier (3b).

13. Barre de connecteurs fluidiques pour un système fluidique de refroidissement ou de chauffage, comprenant au moins deux connecteurs de conduites de fluide (1) connectés fluidiquement les uns aux autres selon l'une des revendications 1 à 12,
**caractérisée en ce que**
les parties d'insertion (11) sont fixées dans des positions relatives différentes les unes des autres par au moins deux des connecteurs de conduites de fluide (1).

14. Barre de connecteurs fluidiques selon la revendication 13,
**caractérisée en ce**
**qu'**au moins deux sections de raccordement (5a, 5b, 5c, 5d) de différents connecteurs fluidiques (1) sont connectées les unes aux autres au moyen de tubes souples en matière synthétique.
